(19) Europäisches Patentamt
European Patent Office
Office européen des brevets

(11) EP 4 365 222 A1

(12) **EUROPEAN PATENT APPLICATION**
published in accordance with Art. 153(4) EPC

(43) Date of publication:
**08.05.2024 Bulletin 2024/19**

(21) Application number: **22833283.9**

(22) Date of filing: **30.06.2022**

(51) International Patent Classification (IPC):
***C08J 3/12*** (2006.01) ***C08F 8/20*** (2006.01)
***C08F 14/26*** (2006.01)

(52) Cooperative Patent Classification (CPC):
**C08F 8/20**

(86) International application number:
**PCT/JP2022/026257**

(87) International publication number:
**WO 2023/277137 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2021 JP 2021109109**

(71) Applicant: **DAIKIN INDUSTRIES, LTD.**
**Osaka-Shi, Osaka 530-0001 (JP)**

(72) Inventors:
- **TAIRA, Takahiro**
**Osaka-shi, Osaka 530-0001 (JP)**
- **MISHIMA, Kazuhiro**
**Osaka-shi, Osaka 530-0001 (JP)**
- **TANAKA, Takayuki**
**Osaka-shi, Osaka 530-0001 (JP)**
- **KUSUNOKI, Takeki**
**Osaka-shi, Osaka 530-0001 (JP)**
- **MIYAMOTO, Masayoshi**
**Osaka-shi, Osaka 530-0001 (JP)**
- **MINAMIYAMA, Tomoki**
**Osaka-shi, Osaka 530-0001 (JP)**
- **TSUKAMOTO, Mitsuo**
**Osaka-shi, Osaka 530-0001 (JP)**
- **ICHIKAWA, Kenji**
**Osaka-shi, Osaka 530-0001 (JP)**
- **YAMABE, Takuya**
**Osaka-shi, Osaka 530-0001 (JP)**
- **YOSHIDA, Hirotoshi**
**Osaka-shi, Osaka 530-0001 (JP)**
- **KATO, Taketo**
**Osaka-shi, Osaka 530-0001 (JP)**
- **YAMANAKA, Taku**
**Osaka-shi, Osaka 530-0001 (JP)**

(74) Representative: **Hoffmann Eitle**
**Patent- und Rechtsanwälte PartmbB**
**Arabellastraße 30**
**81925 München (DE)**

# (54) METHOD FOR PRODUCING POLYTETRAFLUOROETHYLENE POWDER, AND POLYTETRAFLUOROETHYLENE POWDER

(57) Provided is a method for producing a polytetrafluoroethylene powder, comprising subjecting tetrafluoroethylene to suspension polymerization in an aqueous medium to prepare a suspension-polymerized particle of non melt-processible polytetrafluoroethylene, drying the suspension-polymerized particle to prepare a dry particle, subjecting the dry particle to fluorine radical treatment to prepare a fluorine radical-treated particle, and crushing the fluorine radical-treated particle to produce a polytetrafluoroethylene powder.

## Description

TECHNICAL FIELD

The present disclosure relates to a method for producing a polytetrafluoroethylene powder, a method for producing a polytetrafluoroethylene formed article, a method for producing a polytetrafluoroethylene compression-molded article, a polytetrafluoroethylene powder, a polytetrafluoroethylene formed article, and a polytetrafluoroethylene compression-molded article.

BACKGROUND ART

A known method for producing polytetrafluoroethylene powder is an emulsion polymerization method, a suspension polymerization method, or the like.

In an emulsion polymerization method, in general, tetrafluoroethylene is polymerized in an aqueous medium in the presence of a fluorine-containing surfactant to give an aqueous dispersion in which primary particles of polytetrafluoroethylene are stably dispersed in the aqueous medium. The primary particles in the resulting aqueous dispersion are coagulated and dried to give a polytetrafluoroethylene fine powder.

On the other hand, in a suspension polymerization method, in general, tetrafluoroethylene is polymerized in an aqueous medium without any fluorine-containing surfactant or with a small amount of a fluorine-containing surfactant to produce a suspension-polymerized particle. The resulting suspension-polymerized particle is recovered and dried to give a polytetrafluoroethylene molding powder.

For example, Patent Document 1 describes, as a method for producing polytetrafluoroethylene powder by a suspension polymerization method, a method for producing a polytetrafluoroethylene molding powder, the method comprising a step of subjecting a monomer containing 99.8% by mass or more of tetrafluoroethylene to suspension polymerization in an aqueous medium, to produce a granular polymer particle, and a step of crushing the granular polymer particle, in which the aqueous medium contains a compound represented by the following formula (1) at a concentration of 0.5 to 2000 ppm:

$$R^F(OCF(X^1)CF_2)_{k-1}OCF(X^2)COO^-M^+ \qquad (1)$$

wherein $R^F$ is a perfluorinated monovalent organic group having 1 to 10 carbon atoms, $X^1$ and $X^2$ are each independently a fluorine atom or a trifluoromethyl group, k is an integer of 1 or more, and $M^+$ is a hydrogen ion, an ammonium ion, an alkyl-substituted ammonium ion or an alkali metal ion.

Patent Document 2 describes a method for producing a resin powder for modified polytetrafluoroethylene forming, the method comprising bringing a modified polytetrafluoroethylene resin powder obtained by polymerization into contact with a reactive gas containing a fluorine radical source and then replacing the fluorine radical source with an inert gas.

RELATED ART

PATENT DOCUMENTS

Patent Document 1: International Publication No. WO 2014/123075
Patent Document 2: Japanese Patent Laid-Open No. 2001-48922

SUMMARY OF THE INVENTION

PROBLEM TO BE SOLVED BY THE INVENTION

An object of the present disclosure is to provide a production method for producing a polytetrafluoroethylene powder having excellent formability and having a decreased acid odor, and a polytetrafluoroethylene powder having excellent formability and having a decreased acid odor.

MEANS FOR SOLVING THE PROBLEM

The present disclosure provides a method for producing a polytetrafluoroethylene powder, comprising subjecting

tetrafluoroethylene to suspension polymerization in an aqueous medium to prepare a suspension-polymerized particle of a non melt-processible polytetrafluoroethylene, drying the suspension-polymerized particle to prepare a dry particle, subjecting the dry particle to fluorine radical treatment to prepare a fluorine radical-treated particle, and crushing the fluorine radical-treated particle to produce a polytetrafluoroethylene powder.

In the production method of the present disclosure, it is preferable that, the suspension-polymerized particle is washed and then crushed, or the suspension-polymerized particle is crushed with washing, to prepare a crushed suspension-polymerized particle, and then the crushed suspension-polymerized particle is dried.

In the production method of the present disclosure, the average particle size of the dry particle is preferably 100 to 800 μm.

In the production method of the present disclosure, tetrafluoroethylene and a modifying monomer are preferably subjected to suspension polymerization.

In the production method of the present disclosure, the modifying monomer is preferably a perfluoro(alkyl vinyl ether).

In the production method of the present disclosure, the amount of the modifying monomer added in suspension polymerization is preferably 0.01 to 1.0% by mass based on the amount of the polytetrafluoroethylene.

In the production method of the present disclosure, the average particle size of the powder is preferably 200 μm or less.

In the production method of the present disclosure, the standard specific gravity of the powder is preferably 2.200 or less.

In the production method of the present disclosure, the specific surface area of the powder is preferably 5.0 $m^2/g$ or less.

In the production method of the present disclosure, it is preferable that the powder is substantially free from a compound represented by the following general formula (2):

General formula (2): $[C_{n-1}F_{2n-1}COO^-]M^+$

wherein n represents an integer of 9 to 12 and $M^+$ represents a cation.

In the production method of the present disclosure, it is preferable that suspension polymerization is carried out in the presence or absence of a surfactant, and the amount of the surfactant is 2000 mass ppm or less based on the aqueous medium.

The present disclosure also provides a method for producing a polytetrafluoroethylene molded article, the method comprising producing the powder by the production method, and then molding the powder to give a molded article.

The present disclosure provides a method for producing a polytetrafluoroethylene compression-molded article, the method comprising producing the powder by the production method, and then compression molding the powder to give a compression-molded article.

The present disclosure provides a polytetrafluoroethylene powder containing a non melt-processible polytetrafluoroethylene, wherein an average particle size is 200 μm or less and a content of a high-temperature volatile substance is 0.010% by mass or less based on the mass of the polytetrafluoroethylene powder.

The specific surface area of the polytetrafluoroethylene powder of the present disclosure is preferably 5.0 $m^2/g$ or less.

The Z value measured after a formed article obtained from the polytetrafluoroethylene powder of the present disclosure is heated at 370°C for 1.5 hours is preferably 95 or more.

The standard specific gravity of the polytetrafluoroethylene powder of the present disclosure is preferably 2.200 or less.

The polytetrafluoroethylene powder of the present disclosure preferably is substantially free from a fluorine-containing compound having a hydrophilic group.

The fluorine-containing compound having a hydrophilic group in the polytetrafluoroethylene powder of the present disclosure is preferably a compound represented by the following general formula (2):

General formula (2): $[C_{n-1}F_{2n-1}COO^-]M^+$

wherein n represents an integer of 9 to 12 and $M^+$ represents a cation.

The polytetrafluoroethylene powder of the present disclosure preferably is substantially free from a fluorine-containing surfactant.

The polytetrafluoroethylene in the polytetrafluoroethylene powder of the present disclosure preferably contains tetrafluoroethylene unit and a modifying-monomer unit.

The modifying-monomer unit in the polytetrafluoroethylene powder of the present disclosure is preferably a perfluoro(alkyl vinyl ether) unit.

The content of the modifying-monomer unit in the polytetrafluoroethylene powder of the present disclosure is preferably 0.01 to 1.0% by mass based on all polymerization units in the polytetrafluoroethylene.

The present disclosure also provides a polytetrafluoroethylene formed article obtained by forming the polytetrafluoroethylene powder.

The present disclosure also provides a polytetrafluoroethylene compression-molded article obtained by compression molding the polytetrafluoroethylene powder.

EFFECTS OF INVENTION

The present disclosure can provide a production method for producing a polytetrafluoroethylene powder having excellent formability and having a decreased acid odor, and a polytetrafluoroethylene powder having excellent formability and having a decreased acid odor.

DESCRIPTION OF EMBODIMENTS

Hereinafter, specific embodiments of the present disclosure will now be described in detail, but the present disclosure is not limited to the following embodiments.

The production method of the present disclosure relates to a method for producing polytetrafluoroethylene (PTFE) by using a suspension polymerization method.

The production of a PTFE powder by polymerizing tetrafluoroethylene (TFE), as in the production method described in Patent Document 1, has the problem of generating an acid odor from the resulting PTFE powder. The acid odor is a "sour" odor of an acidic substance such as formic acid or acetic acid, and is an odor strongly stimulating the trigeminal nerve.

The production method described in Patent Document 2 comprises drying and crushing a modified polytetrafluoroethylene resin powder obtained by polymerization, and then bringing the powder into contact with a reactive gas containing a fluorine radical source. Such a production method has the problem of causing a mass of the resin powder after contact with the reactive gas and easily causing forming defects.

In the production method of the present disclosure, a suspension-polymerized particle of a non melt-processible PTFE is prepared by a suspension polymerization method, and then the resulting suspension-polymerized particle is dried and a dry particle is subjected to fluorine radical treatment. Furthermore, the fluorine radical-treated particle is crushed to produce a PTFE powder.

The production method of the present disclosure thus comprises suspension polymerization, drying, fluorine radical treatment and crushing which are performed in the listed order, and thus can produce a PTFE powder having excellent formability and having a decreased acid odor. The resulting PTFE powder has excellent formability and has a decreased acid odor, and thus the PTFE powder obtained by the production method of the present disclosure can be used to significantly improve a working environment during forming, suppress generation of forming defects, and produce a formed article at high productivity.

Next, each step of the production method of the present disclosure will be described in detail.

(Polymerization)

In the production method of the present disclosure, first, TFE is subjected to suspension polymerization in an aqueous medium to prepare a suspension-polymerized particle of non melt-processible PTFE.

The suspension-polymerized particle of PTFE is obtained by subjecting TFE to suspension polymerization. The suspension-polymerized particle cannot be present in the state of being dispersed in an aqueous medium. On the contrary, when the PTFE is prepared by subjecting TFE to emulsion polymerization, the PTFE is obtained in the form of a primary particle (emulsion-polymerized particle) dispersed in an aqueous medium.

The suspension-polymerized particle usually has a larger average particle size than the emulsion-polymerized particle. The average particle size of the suspension-polymerized particle is preferably 200 μm or more, more preferably 400 μm or more, and even more preferably 800 μm or more, and is preferably 100 mm or less.

The PTFE obtained by suspension polymerization is preferably a high molecular weight PTFE that is non melt-processible. The term "non melt-processible" means a property that the melt flow rate cannot be measured at a temperature higher than the crystal melting point in accordance with ASTM D 1238 and D 2116.

The standard specific gravity (SSG) of the PTFE is preferably 2.130 to 2.280. The standard specific gravity can be measured according to ASTM D4894. In the present disclosure, when the standard specific gravity (SSG) of the PTFE is within the above range, it is meant that the PTFE is a high molecular weight PTFE.

The peak temperature of the PTFE is preferably 333 to 347°C and more preferably 335 to 347°C. The peak temperature can be specified as the corresponding temperature to the maximum value appearing in a differential thermal

(DTA) curve obtained by heating a PTFE having no history of being heated to a temperature of 300°C or higher, under the condition of 10°C/min with TG/DTA (thermogravimetric - differential thermal analyzer). In the present disclosure, when the peak temperature of the PTFE is within the above range, it is meant that the PTFE is a high molecular weight PTFE.

The PTFE preferably shows at least one or more endothermic peak appearing in a range of 333 to 347°C on a heat-of-fusion curve obtained by heating a PTFE having no history of being heated to a temperature of 300°C or higher, at a temperature-increasing rate of 10°C/min with a differential scanning calorimeter [DSC], and has an enthalpy of fusion of 52 mJ/mg or more at 290 to 350°C, calculated from the heat-of-fusion curve. The enthalpy of fusion of the PTFE is more preferably 55 mJ/mg or more and even more preferably 58 mJ/mg or more.

In the production method of the present disclosure, it is also preferable that TFE and a modifying monomer are subjected to suspension polymerization. That is to say, the PTFE may be a homoPTFE containing only TFE unit, or may be a modified PTFE containing TFE unit and a modifying-monomer unit that is based on a modifying monomer copolymerizable with TFE.

The amount of the modifying monomer added when polymerizing TFE is preferably 0.001% by mass or more, more preferably 0.01% by mass or more, even more preferably 0.03% by mass or more and particularly preferably 0.05% by mass or more, and is preferably 1.0% by mass or less, more preferably 0.8% by mass or less, even more preferably 0.5% by mass or less and particularly preferably 0.3% by mass or less based on the resulting PTFE.

The modifying monomer is not limited as long as it can be copolymerized with TFE, and examples thereof include a fluoromonomer and a non-fluoromonomer. One modifying monomer may be used singly, or multiple modifying monomers may be used.

The non-fluoromonomer is not limited, and examples thereof include a monomer represented by general formula:

$$CH_2=CR^{Q1}-LR^{Q2}$$

wherein $R^{Q1}$ represents a hydrogen atom or an alkyl group; L represents a single bond, -CO-O-*, -O-CO-*, or -O-; * represents a bond position with $R^{Q2}$; and $R^{Q2}$ represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Of these, the non-fluoromonomer is preferably butyl methacrylate, vinyl acetate, or acrylic acid.

Examples of the fluoromonomer include perfluoroolefins such as hexafluoropropylene [HFP]; hydrogen-containing fluoroolefins such as trifluoroethylene and vinylidene fluoride [VDF]; perhaloolefins such as chlorotrifluoroethylene; perfluorovinyl ether; (perfluoroalkyl)ethylene; and perfluoroallyl ether.

The perfluorovinyl ether is not limited, and examples thereof include a perfluoro unsaturated compound represented by general formula (A):

$$CF_2=CF-ORf \qquad (A)$$

wherein Rf represents a perfluoro organic group. The "perfluoro organic group" as used herein means an organic group in which all hydrogen atoms bonded to the carbon atoms are replaced by fluorine atoms. The perfluoro organic group may have ether oxygen.

An example of the perfluorovinyl ether is a perfluoro(alkyl vinyl ether) [PAVE] in which Rf in general formula (A) is a perfluoroalkyl group having 1 to 10 carbon atoms. The perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluoro vinyl ether also include those represented by general formula (A) in which Rf is a perfluoro(alkoxyalkyl) group having 4 to 9 carbon atoms; those in which Rf is a group represented by the following formula:

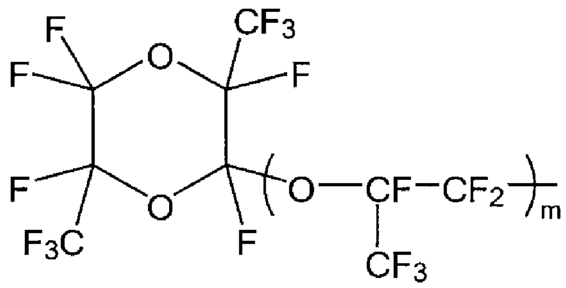

wherein m represents an integer of 0 or 1 to 4; and those in which Rf is a group represented by the following formula:

$CF_3CF_2CF_2$-(O-CF($CF_3$)-$CF_2$)$_n$-

wherein n represents an integer of 1 to 4.

Examples of the hydrogen-containing fluoroolefin include $CH_2$=$CF_2$, CFH=$CH_2$, CFH=$CF_2$, $CH_2$=$CFCF_3$, $CH_2$=$CHCF_3$, CHF=$CHCF_3$ (E isomer), and CHF=$CHCF_3$ (Z isomer).

The (perfluoroalkyl)ethylene (PFAE) is not limited, and examples thereof include (perfluorobutyl)ethylene (PFBE) and (perfluorohexyl)ethylene.

Examples of the perfluoroallyl ether include a fluoromonomer represented by:

General formula: $CF_2$=CF-$CF_2$-ORf

wherein Rf represents a perfluoro organic group.

Rf in the general formula is the same as Rf in general formula (A). Rf is preferably a perfluoroalkyl group having 1 to 10 carbon atoms or a perfluoroalkoxyalkyl group having 1 to 10 carbon atoms. The perfluoroallyl ether is preferably at least one selected from the group consisting of $CF_2$=CF-$CF_2$-O-$CF_3$, $CF_2$=CF-$CF_2$-O-$C_2F_5$, $CF_2$=CF-$CF_2$-O-$C_3F_7$, and $CF_2$=CF-$CF_2$-O-$C_4F_9$, more preferably at least one selected from the group consisting of $CF_2$=CF-$CF_2$-O-$C_2F_5$, $CF_2$=CF-$CF_2$-O-$C_3F_7$, and $CF_2$=CF-$CF_2$-O-$C_4F_9$, and even more preferably $CF_2$=CF-$CF_2$-O-$CF_2CF_2CF_3$.

The modifying monomer is preferably at least one selected from the group consisting of hexafluoropropylene, chlorotrifluoroethylene, vinylidene fluoride, perfluoro(alkyl vinyl ether), (perfluoroalkyl)ethylene, and ethylene, and more preferably a perfluoro(alkyl vinyl ether).

From the viewpoint of reactivity with TFE, the modifying monomer is preferably at least one selected from the group consisting of hexafluoropropylene, perfluoro(alkyl vinyl ether), and (perfluoroalkyl)ethylene, more preferably at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene, and even more preferably at least one selected from the group consisting of perfluoro(methyl vinyl ether) and perfluoro(propyl vinyl ether).

The suspension polymerization can be performed, for example, by charging a reactor with monomers such as TFE, an aqueous medium, and optionally other additives, stirring the contents of the reactor, retaining the reactor at a predetermined polymerization temperature, and then adding a predetermined amount of a polymerization initiator to initiate the polymerization reaction. After the polymerization reaction is initiated, the monomers such as TFE, the polymerization initiator, and a chain transfer agent may be further added depending on the purpose.

The suspension polymerization can be carried out in the presence of a polymerization initiator. The polymerization initiator is not limited as long as it is a polymerization initiator capable of generating radicals within the polymerization temperature range, and known oil-soluble and/or water-soluble polymerization initiators can be used. The polymerization initiator can also be combined with a reducing agent or the like to form a redox agent and initiate polymerization. The concentration of the polymerization initiator is suitably determined according to the type of monomer, the molecular weight of the target PTFE, and the reaction rate.

The polymerization initiator may be a water-soluble radical polymerization initiator.

Examples of the water-soluble radical polymerization initiator include ionic radical initiators, for example, persulfates such as ammonium persulfate, potassium persulfate, and alkali metal persulfates, and permanganate. Such a radical polymerization initiator can also be used as an acidic component and combined with a reducible component such as hydrazine, diimine, iron(II) sulfate, copper(II) sulfate, oxalates, sulfites, or the like to form an oxidation-reduction type initiator. A compound capable of forming a hydrate of iron(II) sulfate, copper(II) sulfate, or the like may be an anhydride or a hydrate.

Examples of the oxidation-reduction type initiator include ammonium persulfate/copper(II) sulfate, ammonium persulfate/iron(II) sulfate, ammonium persulfate/sodium sulfite/iron(II) sulfate, ammonium persulfate/azodicarbonamide/copper(II) sulfate, ammonium persulfate/sodium azodicarboxylate/copper(II) sulfate, ammonium carbamate/copper(II) sulfate, ammonium persulfate/ammonium carbamate/copper(II) sulfate, and potassium permanganate/ammonium oxalate.

In the case of such a combination of these oxidation-reduction type initiators, it is preferable that any one may be introduced into a polymerization tank in advance, and then the other may be added intermittently or continuously with polymerization being performed.

The amount of the radical polymerization initiator used is adjusted so as to enable the reaction rate to be favorably controlled. For example, in the case of ammonium persulfate, the amount is preferably 1 to 100 ppm, more preferably 1 to 50 ppm, and most preferably 1 to 10 ppm based on the aqueous medium.

The suspension polymerization is carried out by polymerizing TFE in an aqueous medium under stirring. The aqueous medium means a liquid containing water. The aqueous medium is not limited as long as it contains water.

The suspension polymerization can be carried out in the presence or absence of a surfactant. The amount of the surfactant is preferably 2000 mass ppm or less, more preferably 1000 mass ppm or less, even more preferably 500 mass ppm or less, particularly preferably 200 mass ppm or less, and most preferably 100 mass ppm or less based on the aqueous medium. The amount of the surfactant may be 0 mass ppm.

The surfactant for use in the suspension polymerization is preferably a fluorine-containing surfactant. Examples of the fluorine-containing surfactant include anionic fluorine-containing surfactants. The anionic fluorine-containing surfactant may be, for example, a fluorine atom-containing surfactant having 20 or fewer carbon atoms in total in the portion excluding the anionic group.

The fluorine-containing surfactant may also be a fluorine-containing surfactant in which the molecular weight of the anionic moiety is 1,000 or less, preferably 800 or less. The "anionic moiety" means a portion of the fluorine-containing surfactant excluding the cation. For example, in the case of $F(CF_2)_{n1}COOM$ represented by the formula (I) below, the anionic moiety is the "$F(CF_2)_{n1}COO$" portion.

Examples of the fluorine-containing surfactant also include fluorine-containing surfactants having a LogPOW of 3.5 or less. The LogPOW of the fluorine-containing surfactant is preferably 3.4 or less. The LogPOW is a partition coefficient between 1-octanol and water, and is represented by LogP, wherein P represents a ratio of the fluorine-containing surfactant concentration in octanol/the fluorine-containing surfactant concentration in water attained when an octanol/water (1:1) mixture containing the fluorine-containing surfactant is phase-separated.

The LogPOW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6% by mass $HClO_4$ solution = 1/1 (vol/vol%), flow rate: 1.0 ml/min, sample volume: 300 μL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3250808, U.S. Patent No. 3271341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

The anionic fluorine-containing surfactant may be a compound represented by the following general formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group having 3 to 20 carbon atoms in which some or all of H are replaced by F, the alkylene group optionally containing one or more ether bonds in which some of H are optionally replaced by Cl; and Y° is an anionic group.

The anionic group Y° may be -COOM, $-SO_2M$, or $-SO_3M$, and may be -COOM or $-SO_3M$.

M is H, a metal atom, $NR^7_4$, optionally substituted imidazolium, optionally substituted pyridinium, or optionally substituted phosphonium, and $R^7$ is H or an organic group.

Examples of the metal atom include alkali metals (Group 1) and alkaline earth metals (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2),

or $NR^7_4$, and may be H, Na, K, Li, or $NH_4$.

In the $Rf^{n0}$, 50% or more of H atoms may be replaced by fluorine atoms.

Examples of the compound represented by the general formula ($N^0$) include a compound represented by the following general formula ($N^1$):

$$X^{n0}-(CF_2)_{m1}-Y^0 \qquad (N^1)$$

(wherein $X^{n0}$ is H, Cl, or F, m1 is an integer of 3 to 15, and $Y^0$ is as defined above); a compound represented by the following general formula ($N^2$):

$$Rf^{n1}-O-(CF(CF_3)CF_2O)_{m2}CFX^{n1}-Y^0 \qquad (N^2)$$

(wherein $Rf^{n1}$ is a perfluoroalkyl group having 1 to 5 carbon atoms, m2 is an integer of 0 to 3, $X^{n1}$ is F or $CF_3$, and $Y^0$ is as defined above); a compound represented by the following general formula ($N^3$) :

$$Rf^{n2}(CH_2)_{m3}-(Rf^{n3})_q-Y^0 \qquad (N^3)$$

(wherein $Rf^{n2}$ is a partially or fully fluorinated alkyl group having 1 to 13 carbon atoms and optionally containing an ether bond and/or a chlorine atom, m3 is an integer of 1 to 3, $Rf^{n3}$ is a linear or branched perfluoroalkylene group having 1 to 3 carbon atoms, q is 0 or 1, and Y° is as defined above); a compound represented by the following general formula ($N^4$):

$$Rf^{n4}-O-(CY^{n1}Y^{n1})_pCF_2-Y^0 \qquad (N^4)$$

(wherein $Rf^{n4}$ is a linear or branched, partially or fully fluorinated alkyl group having 1 to 12 carbon atoms and optionally containing an ether bond, $Y^{n1}$ and $Y^{n2}$ are the same or different and are each independently H or F, p is 0 or 1, and Y° is as defined above); and a compound represented by the following general formula ($N^5$):

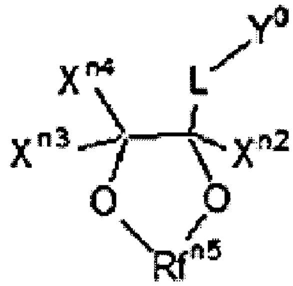

($N^5$)

(wherein $X^{n2}$, $X^{n3}$, and $X^{n4}$ may be the same or different and are each independently H, F, or a linear or branched, partially or fully fluorinated alkyl group having 1 to 6 carbon atoms and optionally containing an ether bond, $Rf^{n5}$ is a linear or branched, partially or fully fluorinated alkylene group having 1 to 3 carbon atoms and optionally containing an ether bond, L is a linking group, and Y° is as defined above, provided that the total number of carbon atoms of $X^{n2}$, $X^{n3}$, $X^{n4}$, and $Rf^{n5}$ is 18 or less).

More specific examples of the compound represented by the above general formula ($N^0$) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

$$F(CF_2)_{n1}COOM \qquad (I)$$

wherein n1 is an integer of 3 to 14, M is H, a metal atom, $NR^7_4$, optionally substituted imidazolium, optionally substituted pyridinium, or optionally substituted phosphonium, and $R^7$ is H or an organic group.

The ω-H perfluorocarboxylic acid (II) is represented by the following general formula (II):

$$H(CF_2)_{n2}COOM \qquad (II)$$

wherein n2 is an integer of 4 to 15, and M is as defined above.

The perfluoroethercarboxylic acid (III) is represented by the following general formula (III):

$$Rf^1\text{-}O\text{-}(CF(CF_3)CF_2O)_{n3}CF(CF_3)COOM \qquad (III)$$

wherein $Rf^1$ is a perfluoroalkyl group having 1 to 5 carbon atoms, n3 is an integer of 0 to 3, and M is as defined above.

The perfluoroalkylalkylenecarboxylic acid (IV) is represented by the following general formula (IV):

$$Rf^2\ (CH_2)_{n4}Rf^3COOM \qquad (IV)$$

wherein $Rf^2$ is a perfluoroalkyl group having 1 to 5 carbon atoms, $Rf^3$ is a linear or branched perfluoroalkylene group having 1 to 3 carbon atoms, n4 is an integer of 1 to 3, and M is as defined above.

The alkoxyfluorocarboxylic acid (V) is represented by the following general formula (V):

$$Rf^4\text{-}O\text{-}CY^1Y^2CF_2\text{-}COOM \qquad (V)$$

wherein $Rf^4$ is a linear or branched, partially or fully fluorinated alkyl group having 1 to 12 carbon atoms and optionally containing an ether bond and/or a chlorine atom; $Y^1$ and $Y^2$ are the same or different and are each independently H or F; and M is as defined above.

The perfluoroalkylsulfonic acid (VI) is represented by the following general formula (VI):

$$F(CF_2)_{n5}SO_3M \qquad (VI)$$

wherein n5 is an integer of 3 to 14, and M is as defined above.

The ω-H perfluorosulfonic acid (VII) is represented by the following general formula (VII):

$$H(CF_2)_{n6}SO_3M \qquad (VII)$$

wherein n6 is an integer of 4 to 14, and M is as defined above.

The perfluoroalkylalkylenesulfonic acid (VIII) is represented by the following general formula (VIII):

$$Rf^5\ (CH_2)_{n7}SO_3M \qquad (VIII)$$

wherein $Rf^5$ is a perfluoroalkyl group having 1 to 13 carbon atoms, n7 is an integer of 1 to 3, and M is as defined above.

The alkylalkylenecarboxylic acid (IX) is represented by the following general formula (IX):

$$Rf^6(CH_2)_{n8}COOM \qquad (IX)$$

wherein $Rf^6$ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

$$Rf^7\text{-}O\text{-}Rf^8\text{-}O\text{-}CF_2\text{-}COOM \qquad (X)$$

wherein $Rf^7$ is a linear or branched, partially or fully fluorinated alkyl group having 1 to 6 carbon atoms and optionally containing an ether bond and/or a chlorine atom; $Rf^8$ is a linear or branched, partially or fully fluorinated alkyl group having 1 to 6 carbon atoms; and M is as defined above.

The alkoxyfluorosulfonic acid (XI) is represented by the following general formula (XI):

$$Rf^9\text{-}O\text{-}CY^1Y^2CF_2\text{-}SO_3M \qquad (XI)$$

wherein $Rf^9$ is a linear or branched, partially or fully fluorinated alkyl group having 1 to 12 carbon atoms and optionally

containing an ether bond and optionally containing chlorine; $Y^1$ and $Y^2$ are the same or different and are each independently H or F; and M is as defined above.

The compound (XII) is represented by the following general formula (XII):

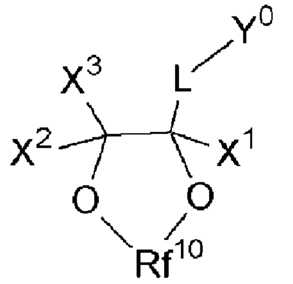

(XII)

wherein $X^1$, $X^2$, and $X^3$ may be the same or different and are each independently H, F, or a linear or branched, partially or fully fluorinated alkyl group having 1 to 6 carbon atoms and optionally containing an ether bond; $Rf^{10}$ is a perfluoroalkylene group having 1 to 3 carbon atoms; L is a linking group; and Y° is an anionic group.

Y° may be -COOM, $-SO_2M$, or $-SO_3M$, and may be $-SO_3M$ or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

$Rf^{11}-O-(CF_2CF(CF_3)O)_{n9}(CF_2O)_{n10}CF_2COOM$ (XIII)

wherein $Rf^{11}$ is a fluoroalkyl group having 1 to 5 carbon atoms containing chlorine, n9 is an integer of 0 to 3, n10 is an integer of 0 to 3, and M is as defined above. Examples of the compound (XIII) include $CF_2ClO(CF_2CF(CF_3)O)_{n9}(CF_2O)_{n10}CF_2COONH_4$ (a mixture having an average molecular weight of 750, n9 and n10 in the formula are defined above).

Thus, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

Examples of the fluorine-containing surfactant include compounds represented by the following formulae. The fluorine-containing surfactant may be a mixture of these compounds.

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF (CF_3) COOM$,

$CF_3CF_2OCF_2CF_2OCF_2COOM$,

$C_2F_5OCF (CF_3) CF_2OCF (CF_3) COOM$,

$CF_3OCF (CF_3) CF_2OCF (CF_3) COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$, and

$CF_2ClCF(CF_3)OCF_2CF(CF_3)OCF_2COOM$,

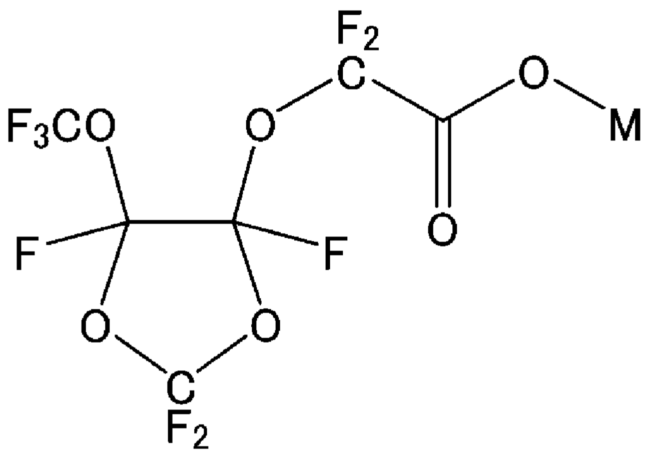

wherein M is H, a metal atom, $NR^7_4$, optionally substituted imidazolium, optionally substituted pyridinium, or optionally substituted phosphonium. $R^7$ is H or an organic group.

The suspension-polymerized particle obtained by suspension polymerization performed in the presence of the fluorine-containing surfactant usually contains, other than the PTFE, the fluorine-containing surfactant. Also, the suspension-polymerized particle obtained by polymerizing the monomers such as TFE and the modifying monomer may contain, other than the PTFE, a fluorine-containing compound produced by polymerizing the monomers. In the present disclosure, the fluorine-containing compound is a compound that is not added during suspension polymerization, such as a compound having a structure similar to that of the fluorine-containing surfactant but having a different number of carbon atoms.

The production method of the present disclosure is capable of producing a PTFE powder in which the content of the fluorine-containing compound produced by polymerizing the monomers is reduced. The production method of the present disclosure is capable of producing a PTFE powder in which the content of the fluorine-containing surfactant is reduced even when the suspension polymerization is carried out in the presence of the fluorine-containing surfactant.

A typical compound as the fluorine-containing compound in the suspension-polymerized particle is a fluorine-containing compound having a hydrophilic group, having a molecular weight of 1000 g/mol or less, preferably 800 g/mol or less. The production method of the present disclosure is capable of producing a PTFE powder in which the content of a fluorine-containing compound having a hydrophilic group, having a molecular weight of 1000 g/mol or less, preferably 800 g/mol or less in the suspension-polymerized particle obtained by polymerizing the monomers such as TFE, is reduced.

The hydrophilic group in the fluorine-containing compound is preferably an anionic group such as an acid group, and examples thereof include $-NH_2$, $-PO_3M$, $-OPO_3M$, $-SO_3M$, $-OSO_3M$, and -COOM (wherein M represents a cation). Of these, the hydrophilic group is preferably $-SO_3M$ or -COOM, and more preferably -COOM.

The suspension-polymerized particle in one embodiment contains, as the fluorine-containing compound having the hydrophilic group, a compound represented by the following general formula (1):

General formula (1): $[X\text{-}Rf\text{-}A^-]_iM^{i+}$

wherein X represents H, Cl, Br, F or I; Rf represents a linear or branched, partially fluorinated or fully fluorinated aliphatic group, or a linear or branched, partially fluorinated or fully fluorinated aliphatic group interrupted by at least one oxygen atom; $A^-$ represents an acid group; $M^{i+}$ represents a cation having a valence of i; and i represents an integer of 1 to 3.

The suspension-polymerized particle in one embodiment contains, as the fluorine-containing compound having the hydrophilic group, a compound represented by the following general formula (2):

General formula (2): $[C_{n-1}F_{2n-1}COO^-]M^+$

wherein n represents an integer of 9 to 12 and $M^+$ represents a cation.

The compound (perfluoroalkanoic acid) represented by general formula (2) is known to be formed during polymerization when perfluoroalkyl vinyl ether or the like is used as a modifying monomer (see International Publication No. WO 2019/161153) .

The suspension-polymerized particle in one embodiment contains, as the fluorine-containing compound having the hydrophilic group, a compound represented by the following general formula (3):

General formula (3): $[R^1\text{-O-L-}CO_2^-]M^+$

wherein $R^1$ represents a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated or fully fluorinated alkylene group; and $M^+$ represents a cation.

The suspension-polymerized particle in one embodiment contains, as the fluorine-containing compound having the hydrophilic group, a compound represented by general formula (4) :

General formula (4) : $[H\text{-}(CF_2)_mCO_2^-]M^+$

wherein m represents an integer of 3 to 19 and $M^+$ represents a cation.

(Drying)

In the production method of the present disclosure, next, the suspension-polymerized particle is dried to prepare a dry particle. The suspension-polymerized particle obtained by suspension polymerization is usually obtained in a wet form. The water content in the suspension-polymerized particle is, for example, more than 40% by mass. Fluorine radical treatment can be safely performed by drying a wet suspension-polymerized particle and then subjecting the resulting dry particle to fluorine radical treatment.

Examples of the method for drying the suspension-polymerized particle include a drying method with a dryer. Examples of the dryer include a hot air type dryer, a box type dryer, a band dryer, a tunnel dryer, a jet dryer, a moving bed dryer, a rotation dryer, a fluidized bed dryer, an airflow dryer, a disk dryer, a cylinder type stirring dryer, an inverse-cone type stirring dryer, a microwave device, a vacuum heat treatment device, a box type electric furnace, a flash dryer, a vibrating dryer, a belt dryer, an extrusion dryer, and a spray dryer.

The temperature for drying the suspension-polymerized particle is preferably lower than 300°C, more preferably 280°C or lower and even more preferably 250°C or lower, and is preferably 50°C or higher, more preferably 100°C or higher, even more preferably 120°C or higher and particularly preferably 140°C or higher. The drying temperature is the temperature of the atmosphere around the suspension-polymerized particle, and can be specified by measuring the temperature of hot air in the case of use of hot air in drying. The temperature of hot air can be measured at a feed port through which hot air is fed to the dryer or an exhaust port through which hot air is exhausted from the dryer, and is preferably measured at the exhaust port.

The suspension-polymerized particle may be dehydrated before drying. Examples of the method for dehydrating the wet suspension-polymerized particle include a dehydration method with a dehydrator. Examples of the dehydrator include a vibrating dehydrator, a filtering dehydrator, and a centrifugal dehydrator.

The water content in the dry particle is preferably 40% by mass or less, more preferably 20% by mass or less and even more preferably 10% by mass or less, and the lower limit is not limited, and may be 0.01% by mass or more. The water content in the dry particle can be adjusted by, for example, dehydrating or drying the suspension-polymerized particle. The water content in the dry particle can be determined by, for example, heating and thus sufficiently drying the dry particle at 150°C for 3 hours, measuring the mass of the dry particle before and after heating, and performing calculation according to the following expression.

Water content (% by mass) = [(Mass (g) of dry particle before heating) - (Mass (g) of dry particle after heating)]/(Mass (g) of dry particle after heating) $\times$ 100

The suspension-polymerized particle may be washed before drying. Water or an organic solvent can be used for washing the suspension-polymerized particle. The washing may be carried out once or multiple times. Examples of the organic solvent used in such washing include ether, halogenated hydrocarbon, aromatic hydrocarbon, pyridine, nitrile, a nitrogen-containing polar organic compound, dimethylsulfoxide, and alcohol.

The suspension-polymerized particle or the dry particle may be crushed before fluorine radical treatment. That is to say, fluorine radical treatment may be performed after the suspension-polymerized particle is crushed and the crushed suspension-polymerized particle is dried to prepare a crushed dry particle, or fluorine radical treatment may be

performed after the suspension-polymerized particle is dried to prepare a dry particle and the dry particle is crushed to prepare a crushed dry particle. The suspension-polymerized particle is suitably crushed before the suspension-polymerized particle is dried because the drying efficiency of the suspension-polymerized particle is increased.

Examples of the method for crushing the suspension-polymerized particle include a crushing method with a crusher. Examples of the crusher include impact type crushers such as a hammer mill, a pin mill, and a jet mill, and grinding type crushers for crushing due to the shear force generated by a rotary blade and a peripheral stator (stationary knife), such as a cutter mill. A combination of a plurality of crushing devices may be used in crushing.

The temperature at which crushing treatment is carried out is preferably -200 to 50°C, more preferably 1°C or higher, more preferably 40°C or lower, and even more preferably 30°C or lower.

The crushing may be carried out once or may be repeatedly carried out until a suspension-polymerized particle having a desired average particle size or a desired particle size distribution can be prepared.

The suspension-polymerized particle may be washed and then crushed, or the suspension-polymerized particle may be crushed with washing, to prepare a crushed suspension-polymerized particle, and the resulting suspension-polymerized particle may be dried.

Examples of the method for crushing the suspension-polymerized particle with washing the particle include a method involving crushing the suspension-polymerized particle in water or an organic solvent. For example, water or an organic solvent and the suspension-polymerized particle may be simultaneously fed to a grinding type crusher such as a cutter mill to crush the suspension-polymerized particle, or water or an organic solvent and the suspension-polymerized particle may be mixed in advance and the mixture may be fed to the crusher to crush the suspension-polymerized particle.

When the suspension-polymerized particle is crushed, the average particle size of the crushed suspension-polymerized particle is preferably 800 μm or less, more preferably 600 μm or less and even more preferably 400 μm or less, and is preferably 100 μm or more, more preferably 150 μm or more and even more preferably 200 μm or more.

(Fluorine radical treatment)

In the production method of the present disclosure, next, the resulting dry particle is subjected to fluorine radical treatment to prepare a fluorine radical-treated particle.

Examples of the fluorine radical treatment method include a method involving exposing the dry particle to a fluorine radical source for generating fluorine radicals. Examples of the fluorine radical source include, in addition to fluorine gas, $CoF_3$, $AgF_2$, $UF_6$, $OF_2$, $N_2F_2$, $CF_3OF$, halogen fluorides (for example, $IF_n$ such as IF, $IF_3$, $IF_5$, and $IF_7$ (n is an integer of 1 to 7) ; and ClF, $ClF_3$, and $BrF_3$), noble gas fluorides ($XeF_2$, $XeF_4$, $KrF_2$, and the like), and nitrogen-containing fluorine compounds (for example, $NF_3$ and $NF_2$). Of these, fluorine gas is most preferable from the viewpoint of handleability and price, from the viewpoint of being capable of rapidly removing an acid odor, and from the viewpoint of hardly imparting new impurities such as iodine.

Since reaction with the fluorine radical source is extremely exothermic, the fluorine radical source may be diluted with an inert gas such as nitrogen.

Any reaction device used for fluorine radical treatment can be used without any problems as long as it is a device including a heating device and being capable of sufficiently performing solid-gas contact. Specific examples include fluidized bed type and shelf plate type solid-gas contact reaction devices.

The fluorine radical treatment is preferably performed in a state where the dry particle and the fluorine radical source are sealed in a sealable container, from the viewpoint of production stability.

The pressure at which the fluorine radical treatment is performed is not limited. The fluorine radical treatment may be performed under pressure or under normal pressure.

In one embodiment, the fluorine radical treatment can be performed at, for example, 0 to 0.20 MPaG. For example, the fluorine radical treatment can be performed with the dry particle and the fluorine radical source being sealed in a stainless container so that the pressure in the container is normal pressure. The present embodiment is particularly effective in terms of production stabilization.

The fluorine radical treatment is also preferably performed by a constant flow method (method involving allowing the fluorine radical source to constantly flow in a container accommodating the dry particle) from the viewpoint of a decrease in acid odor.

The level of the fluorine radical source in a fluorine radical source/inert gas mixture can be 1 to 100% by volume, and is preferably about 5 to about 25% by volume because an operation with pure fluorine has a high risk. In order that the dry particle which is to actively undergo heat-induced discoloration is prevented from being overheated and accordingly being at risk of fire, the fluorine radical source/inert gas mixture may be sufficiently diluted.

The temperature of the fluorine radical treatment is preferably 100°C or higher, more preferably 150°C or higher, even more preferably 170°C or higher, yet even more preferably 200°C or higher, even further preferably 210°C or higher, particularly preferably 210°C or higher, and most preferably 230°C or higher. The temperature of the fluorine

radical treatment is preferably 310°C or lower, more preferably 300°C or lower, even more preferably 290°C or lower, yet even more preferably 280°C or lower, even further preferably 270°C or lower, particularly preferably 250°C or lower, and most preferably 240°C or lower. If the temperature of the fluorine radical treatment is too low, an acid odor cannot be possibly sufficiently removed. If the temperature of the fluorine radical treatment is too high, fibrillating can easily occur even by a small shear force due to friction of PTFE to easily cause loss in state of the original particle structure, possibly leading to deterioration in formability.

The fluorine radical treatment time (time during which the dry particle and the fluorine radical source are brought into contact with each other) is preferably 240 minutes or less, 120 minutes or less, 60 minutes or less, 30 minutes or less, 15 minutes or less, 5 minutes or less, or 1 minute or less. In particular, the fluorine radical treatment time is preferably less than 60 minutes, 30 minutes or less, 15 minutes or less, 5 minutes or less, or 1 minute or less from the viewpoint of the cost. The fluorine radical treatment time may be, for example, 1 second or more.

When the fluorine radical treatment is performed by flow type treatment (treatment to be performed by a constant flow method), the amount of the fluorine radical source added is preferably 0.01 parts by mass or more, 0.03 parts by mass or more, 0.05 parts by mass or more, 0.10 parts by mass or more, 0.15 parts by mass or more, 0.30 parts by mass or more, 0.50 parts by mass or more, 0.75 parts by mass or more, 1.0 part by mass or more, 3.0 parts by mass or more, or 5.0 parts by mass or more, based on 100 parts by mass of the dry particle.

When the fluorine radical treatment is performed by flow type treatment, the amount of the fluorine radical source added is preferably 25 parts by mass or less, 20 parts by mass or less, or 15 parts by mass or less based on 100 parts by mass of the dry particle.

If the amount of the fluorine radical source added is too small, an acid odor cannot be possibly sufficiently removed. Even if the amount of the fluorine radical source added is too large, the effect of the fluorine radical treatment is not enhanced and the treatment is possibly uneconomic.

A suitable combination of the temperature of the fluorine radical treatment and the amount of the fluorine radical source added, in the case of the fluorine radical treatment performed by flow type treatment, is exemplified in more detail.

The combination, in order of preference, is 100°C or higher and 3.00 parts by mass or more, and 100°C or higher and 5.00 parts by mass or more.

The combination, in order of preference, is 150°C or higher and 0.50 parts by mass or more, 150°C or higher and 0.75 parts by mass or more, 150°C or higher and 1.0 parts by mass or more, 150°C or higher and 3.0 parts by mass or more, and 150°C or higher and 5.0 parts by mass or more.

The combination, in order of preference, is 170°C or higher and 0.50 parts by mass or more, 170°C or higher and 0.75 parts by mass or more, 170°C or higher and 1.0 parts by mass or more, 170°C or higher and 3.0 parts by mass or more, and 170°C or higher and 5.0 parts by mass or more.

The combination, in order of preference, is 200°C or higher and 0.03 parts by mass or more, 200°C or higher and 0.05 parts by mass or more, 200°C or higher and 0.10 parts by mass or more, 200°C or higher and 0.15 parts by mass or more, 200°C or higher and 0.30 parts by mass or more, 200°C or higher and 0.50 parts by mass or more, 200°C or higher and 0.75 parts by mass or more, 200°C or higher and 1.0 parts by mass or more, 200°C or higher and 3.0 parts by mass or more, and 200°C or higher and 5.0 parts by mass or more.

The combination, in order of preference, is 210°C or higher and 0.03 parts by mass or more, 210°C or higher and 0.05 parts by mass or more, 210°C or higher and 0.10 parts by mass or more, 210°C or higher and 0.15 parts by mass or more, 210°C or higher and 0.30 parts by mass or more, 210°C or higher and 0.50 parts by mass or more, 210°C or higher and 0.75 parts by mass or more, 210°C or higher and 1.0 parts by mass or more, 210°C or higher and 3.0 parts by mass or more, and 210°C or higher and 5.0 parts by mass or more.

The combination, in order of preference, is 210°C or higher and 0.01 parts by mass or more, 210°C or higher and 0.03 parts by mass or more, 210°C or higher and 0.05 parts by mass or more, 210°C or higher and 0.10 parts by mass or more, 210°C or higher and 0.15 parts by mass or more, 210°C or higher and 0.30 parts by mass or more, 210°C or higher and 0.50 parts by mass or more, 210°C or higher and 0.75 parts by mass or more, 210°C or higher and 1.0 parts by mass or more, 210°C or higher and 3.0 parts by mass or more, and 210°C or higher and 5.0 parts by mass or more.

The combination, in order of preference, is 230°C or higher and 0.01 parts by mass or more, 230°C or higher and 0.03 parts by mass or more, 230°C or higher and 0.05 parts by mass or more, 230°C or higher and 0.10 parts by mass or more, 230°C or higher and 0.15 parts by mass or more, 230°C or higher and 0.30 parts by mass or more, 230°C or higher and 0.50 parts by mass or more, 230°C or higher and 0.75 parts by mass or more, 230°C or higher and 1.0 parts by mass or more, 230°C or higher and 3.0 parts by mass or more, and 230°C or higher and 5.0 parts by mass or more.

The amount of the fluorine radical source added, in the case of the fluorine radical treatment performed by flow type treatment, can be calculated by the following calculation expressions, and is expressed as the amount added based on 100 parts by mass of the dry particle (parts by mass).

$$A = (B/F) \times 100$$

$$B = C \times D \times E$$

$$C = \{P/(RT \times 1000)\} \times G \times H$$

A: Amount (parts by mass) of fluorine radical source added based on 100 parts by mass of dry particle
B: Amount (g) of whole fluorine radical source
C: Concentration (g/mL) of fluorine radical source in mixed gas
D: Flow speed (mL/min) of mixed gas
E: Fluorine radical treatment time (min)
F: Amount (g) of sample (dry particle) placed
G: Molecular weight (g/mol) of fluorine radical source
H: Ratio (mass ratio) of fluorine radical source in mixed gas

wherein P, R, and T adopt the following values.

$$P = \text{Absolute pressure (Pa)}$$

$$R = 8.31 \times 10^3 \text{ (Pa·L/K·mol)}$$

$$T = \text{temperature (K)}$$

When the fluorine radical treatment is performed by batch type treatment (treatment to be performed in a state where the dry particle and the fluorine radical source are sealed in a sealable container), the amount of the fluorine radical source added is preferably 0.01 parts by mass or more, 0.03 parts by mass or more, 0.05 parts by mass or more, 0.10 parts by mass or more, 0.15 parts by mass or more, 0.30 parts by mass or more, 0.50 parts by mass or more, or 0.75 parts by mass or more based on 100 parts by mass of the dry particle.
When the fluorine radical treatment is performed by batch type treatment, the amount of the fluorine radical source added is preferably 5.0 parts by mass or less, or 3.0 parts by mass or less based on 100 parts by mass of the dry particle.
If the amount of the fluorine radical source added is too small, an acid odor cannot be possibly sufficiently removed. Even if the amount of the fluorine radical source added is too large, the effect of the fluorine radical treatment is not enhanced and the treatment is possibly uneconomic.
A suitable combination of the temperature of the fluorine radical treatment and the amount of the fluorine radical source added, in the case of the fluorine radical treatment performed by batch type treatment, is exemplified in more detail.
The combination is preferably 100°C or higher and 0.75 parts by mass or more.
The combination, in order of preference, is 150°C or higher and 0.30 parts by mass or more, 150°C or higher and 0.50 parts by mass or more, and 150°C or higher and 0.75 parts by mass or more.
The combination, in order of preference, is 170°C or higher and 0.30 parts by mass or more, 170°C or higher and 0.50 parts by mass or more, and 170°C or higher and 0.75 parts by mass or more.
The combination, in order of preference, is 200°C or higher and 0.01 parts by mass or more, 200°C or higher and 0.03 parts by mass or more, 200°C or higher and 0.05 parts by mass or more, 200°C or higher and 0.10 parts by mass or more, 200°C or higher and 0.15 parts by mass or more, 200°C or higher and 0.30 parts by mass or more, 200°C or higher and 0.50 parts by mass or more, and 200°C or higher and 0.75 parts by mass or more.
The combination, in order of preference, is 210°C or higher and 0.01 parts by mass or more, 210°C or higher and 0.03 parts by mass or more, 210°C or higher and 0.05 parts by mass or more, 210°C or higher and 0.10 parts by mass or more, 210°C or higher and 0.15 parts by mass or more, 210°C or higher and 0.30 parts by mass or more, 210°C or higher and 0.50 parts by mass or more, and 210°C or higher and 0.75 parts by mass or more.
The combination, in order of preference, is 220°C or higher and 0.01 parts by mass or more, 220°C or higher and 0.03 parts by mass or more, 220°C or higher and 0.05 parts by mass or more, 220°C or higher and 0.10 parts by mass or more, 220°C or higher and 0.15 parts by mass or more, 220°C or higher and 0.30 parts by mass or more, 220°C or higher and 0.50 parts by mass or more, and 220°C or higher and 0.75 parts by mass or more.
The combination, in order of preference, is 230°C or higher and 0.01 parts by mass or more, 230°C or higher and 0.03 parts by mass or more, 230°C or higher and 0.05 parts by mass or more, 230°C or higher and 0.10 parts by

mass or more, 230°C or higher and 0.15 parts by mass or more, 230°C or higher and 0.30 parts by mass or more, 230°C or higher and 0.50 parts by mass or more, and 230°C or higher and 0.75 parts by mass or more.

The amount of the fluorine radical source added, in the case of the fluorine radical treatment performed by batch type treatment, can be calculated by the following calculation expressions, and is expressed as the amount added based on 100 parts by mass of the dry particle (parts by mass).

$$A = (B/F) \times 100$$

$$B = G \times H \times P_F \times V_1/(R \times T)$$

$$P_F = P_2 - P_1$$

$$V_1 = V - V_p$$

$$V_p = F/I/1000$$

A: Amount (parts by mass) of fluorine radical source added based on 100 parts by mass of dry particle
B: Amount (g) of whole fluorine radical source
F: Amount (g) of sample (dry particle) placed
G: Molecular weight (g/mol) of fluorine radical source
H: Ratio (mass ratio) of fluorine radical source in mixed gas
I: True gravity of polytetrafluoroethylene
$P_F$ = Absolute pressure (Pa)
$P_1$: Absolute pressure (Pa) before loading of fluorine radical source
$P_2$: Absolute pressure (Pa) after loading of fluorine radical source
V: Volume (L) of reaction tank
$V_1$: Space volume (L) in reaction tank
$V_p$: Polymer volume (L) in reaction tank wherein R, T, and I adopt the following values.

$$R = 8.31 \times 10^3 \text{ (Pa·L/K·mol)}$$

$$T = \text{temperature (K)}$$

$$I = 2.2 \text{ g/mL}$$

The fluorine radical treatment may be carried out multiple times. For example, a removal step may be carried out twice, 3 times, 4 times, 5 times, 6 times, 7 times, 8 times, 9 times or 10 times.

(Crushing)

In the production method of the present disclosure, next, a PTFE powder is produced by crushing the resulting fluorine radical-treated particle. After the fluorine radical treatment, the fluorine radical-treated particle can be crushed, thereby producing a PTFE powder not only having a decreased acid odor, but also having excellent formability.

The fluorine radical-treated particle is crushed by dry crushing. Examples of the method for crushing the fluorine radical-treated particle include a crushing method with a crusher. Examples of the crusher include impact type crushers such as a hammer mill, a pin mill, and a jet mill, and grinding type crushers for crushing due to the shear force generated by a rotary blade and a peripheral stator (stationary knife), such as a cutter mill. A combination of a plurality of crushing devices may be used in crushing.

The temperature at which the crushing treatment is carried out is preferably -200 to 50°C, more preferably 1°C or higher, more preferably 40°C or lower, and even more preferably 30°C or lower.

The crushing may be carried out once or may be repeatedly carried out until a PTFE powder having a desired average particle size or a desired particle size distribution can be prepared.

After the fluorine radical-treated particle is crushed, the resulting crushed particle may be classified by a known method such as airflow classification. The classification can remove any fine particle having a very small particle size and any coarse particle having a very large particle size, to give a PTFE powder having a desired average particle size or a desired particle size distribution.

(PTFE powder)

A PTFE powder is obtained by crushing the fluorine radical-treated particle. The powder obtained by the production method of the present disclosure is obtained from the suspension-polymerized particle obtained by suspension polymerization, and thus is generally called molding powder.

The present disclosure also relates to a PTFE powder containing non melt-processible PTFE, wherein the average particle size is 200 μm or less and the content of the high-temperature volatile substance is 0.010% by mass or less based on the mass of the PTFE powder. The PTFE powder of the present disclosure has such a configuration, and has excellent formability and hardly causes an acid odor felt. The PTFE powder of the present disclosure can be produced by the above production method. That is to say, the PTFE powder of the present disclosure may be one generally called molding powder.

The average particle size of the PTFE powder is preferably 200 μm or less, more preferably 100 μm or less, even more preferably less than 100 μm, yet even more preferably 70 μm or less, particularly preferably 50 μm or less and most preferably 30 μm or less, and is preferably 1 μm or more, more preferably 5 μm or more, even more preferably 10 μm or more, yet even more preferably 15 μm or more and particularly preferably 20 μm or more. If the average particle size of the PTFE powder is too large, formability of the powder deteriorates and forming defects easily occur in a formed article. If the average particle size of the PTFE powder is too small, handleability tends to be inferior.

The average particle size of the PTFE powder is a 50% cumulative particle size measured by a laser diffraction method. In the present disclosure, the average particle size of any other particle, for example, the suspension-polymerized particle, is also a 50% cumulative particle size measured by a laser diffraction method.

The content of a high-temperature volatile substance in the PTFE powder is preferably 0.010% by mass or less, more preferably 0.005% by mass or less and even more preferably 0.003% by mass or less, and is particularly preferably 0.002% by mass or less, based on the mass of the PTFE powder.

The content of the high-temperature volatile substance in the PTFE powder can be determined by measuring the mass of the PTFE powder heated at 370°C for 2 hours according to JIS K 6891, and performing calculation according to the following expression.

High-temperature volatile substance (% by mass) = [(Mass (g) of PTFE powder before heating) - (Mass (g) of PTFE powder after heating)]/(Mass (g) of PTFE powder before heating) × 100

The Z value of the PTFE powder is preferably 95 or more, more preferably 97 or more, and even more preferably 98 or more.

The Z value of the PTFE powder can be measured by the following method. 210 g of the PTFE powder is weighed, and a block of 50 mm (diameter) × 50 mm (height) is made by using a mold having a diameter of 50 mm and retaining it at a forming ram speed of 13 mm/min and a forming pressure of 29.4 MPa for 5 minutes. The block is fired at 370°C for 1.5 hours. The block is laterally divided using a turning machine, and the coloring degree of the center portion is measured with a color difference meter based on JIS Z 8722, thereby determining the value of Z.

The standard specific gravity of the PTFE powder may be 2.130 to 2.280, and is preferably 2.200 or less and more preferably 2.135 or more.

The standard specific gravity of the PTFE powder can be measured according to ASTM D4894.

The specific surface area of the PTFE powder is preferably 5.0 $m^2/g$ or less, more preferably 4.5 $m^2/g$ or less and even more preferably 4.0 $m^2/g$ or less, and is preferably 0.1 $m^2/g$ or more and more preferably 1.0 $m^2/g$ or more.

The specific surface area of the PTFE powder can be measured according to the BET method, based on JIS Z8830, by using a mixed gas of 30% of nitrogen and 70% of helium, as a carrier gas, and cooling the gas with liquid nitrogen.

The apparent density of the PTFE powder is preferably 0.55 $g/cm^3$ or less, more preferably 0.50 $g/cm^3$ or less and even more preferably 0.45 $g/cm^3$ or less, and is preferably 0.15 $g/cm^3$ or more, more preferably 0.20 $g/cm^3$ or more and even more preferably 0.25 $g/cm^3$ or more.

The apparent density of the PTFE powder can be measured according to JIS K 6891.

The PTFE contained in the PTFE powder may be a homoPTFE containing only TFE unit, or may be a modified PTFE containing TFE unit and a modifying-monomer unit that is based on a modifying monomer copolymerizable with

TFE.

Examples of the modifying monomer forming the modifying-monomer unit include a modifying monomer used in the production method of the present disclosure, and the same modifying monomer as that used in the production method of the present disclosure is preferable.

The content of the modifying-monomer unit in PTFE is preferably 0.001% by mass or more, more preferably 0.01% by mass or more, even more preferably 0.03% by mass or more and particularly preferably 0.05% by mass or more, and is preferably 1.0% by mass or less, more preferably 0.8% by mass or less, even more preferably 0.5% by mass or less and particularly preferably 0.3% by mass or less, based on all polymerization units constituting PTFE.

In the present disclosure, the content of each of the monomer units constituting PTFE can be calculated by appropriately combining NMR, FT-IR, elemental analysis, and X-ray fluorescence analysis in accordance with the types of the monomers. The content of each of the monomer units constituting PTFE can also be determined by calculation from the amount of the modifying monomer added, used in polymerization.

The PTFE powder in one embodiment contains a fluorine-containing compound.

The PTFE powder in one embodiment is substantially free from a fluorine-containing compound. The fluorine-containing compound is a compound not added in suspension polymerization, as described above. A typical compound as the fluorine-containing compound is a fluorine-containing compound having a hydrophilic group, having a molecular weight of 1000 g/mol or less, preferably 800 g/mol or less.

The PTFE powder in one embodiment is substantially free from, as the fluorine-containing compound having the hydrophilic group, a compound represented by the following general formula (1):

General formula (1): $[X\text{-}Rf\text{-}A^-]_iM^{i+}$

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; $A^-$ is an acid group; $M^{i+}$ is a cation having a valence of i; and i represents an integer of 1 to 3.

The PTFE powder in one embodiment is substantially free from, as the fluorine-containing compound having the hydrophilic group, a compound represented by the following general formula (2):

General formula (2): $[C_{n-1}F_{2n-1}COO^-]M^+$

wherein n is an integer of 9 to 12, and $M^+$ represents a cation.

The compound (perfluoroalkanoic acid) represented by general formula (2) is known to be formed during polymerization when perfluoroalkyl vinyl ether or the like is used as a modifying monomer (see International Publication No. WO 2019/161153) .

The PTFE powder in one embodiment is substantially free from, as the fluorine-containing compound having the hydrophilic group, a compound represented by the following general formula (3):

General formula (3): $[R^1\text{-}O\text{-}L\text{-}CO_2^-]M^+$

wherein $R^1$ represents a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated or fully fluorinated alkylene group; and $M^+$ represents a cation.

The PTFE powder in one embodiment is substantially free from, as the fluorine-containing compound having the hydrophilic group, a compound represented by general formula (4) :

General formula (4) : $[H\text{-}(CF_2)_mCO_2^-]M^+$

wherein m represents an integer of 3 to 19, and $M^+$ represents a cation.

In the present disclosure, "substantially free from the fluorine-containing compound (fluorine-containing compound having the hydrophilic group)" means that the content of the fluorine-containing compound (fluorine-containing compound generated by polymerizing the monomers) in the PTFE powder is 50 mass ppb or less based on PTFE. The content of the fluorine-containing compound (fluorine-containing compound having the hydrophilic group) in the PTFE powder is preferably 35 mass ppb or less, more preferably 25 mass ppb or less, even more preferably 10 mass ppb or less, even more preferably 1 mass ppb or less, and the content of the fluorine-containing surfactant is particularly preferably less than the detection limit in measurement by liquid chromatography-mass spectrometry (LC/MS).

The content of the fluorine-containing compound (fluorine-containing compound having the hydrophilic group) can be quantified by a known method. For example, the content can be quantified by LC/MS analysis.

First, methanol is added to the PTFE powder to perform extraction, and the resulting extract is subjected to

LC/MS analysis. In order to further improve the extraction efficiency, treatment by Soxhlet extraction, ultrasonic treatment, or the like may be performed.

Molecular weight information is extracted from the resulting LC/MS spectrum to confirm agreement with the structural formula of the candidate fluorine-containing compound (fluorine-containing compound having the hydrophilic group).

Thereafter, aqueous solutions having five or more different content levels of the confirmed fluorine-containing compound (fluorine-containing compound having the hydrophilic group) are prepared, and the LC/MS analysis is carried out on the aqueous solutions with the respective content levels, and the relationship between the content level and the area corresponding to that content level is plotted to draw a calibration curve.

Then, using the calibration curve, the area of the LC/MS chromatogram of the fluorine-containing compound (fluorine-containing compound having the hydrophilic group) in the extract can be converted to the content of the fluorine-containing compound (fluorine-containing compound having the hydrophilic group) .

The PTFE powder in one embodiment contains a fluorine-containing surfactant. The PTFE powder in one embodiment contains the fluorine-containing compound and a fluorine-containing surfactant.

The PTFE powder in one embodiment is substantially free from a fluorine-containing surfactant.

In the present disclosure, "substantially free from a fluorine-containing surfactant" means that the content of the fluorine-containing surfactant in the PTFE powder is 50 mass ppb or less. The content of the fluorine-containing surfactant in the PTFE powder is preferably 35 mass ppb or less, more preferably 25 mass ppb or less, even more preferably 10 mass ppb or less, even more preferably 1 mass ppb or less, and the content of the fluorine-containing surfactant is particularly preferably less than the detection limit in measurement by liquid chromatography-mass spectrometry (LC/MS).

The content of the fluorine-containing surfactant can be quantified by a known method. For example, the content can be quantified by LC/MS analysis.

First, methanol is added to the PTFE powder to perform extraction, and the resulting extract is subjected to LC/MS analysis. In order to further improve the extraction efficiency, treatment by Soxhlet extraction, ultrasonic treatment, or the like may be performed.

Molecular weight information is extracted from the resulting LC/MS spectrum to confirm agreement with the structural formula of the candidate fluorine-containing surfactant.

Thereafter, aqueous solutions having five or more different content levels of the confirmed fluorine-containing surfactant are prepared, and the LC/MS analysis is carried out on the aqueous solutions with the respective content levels, and the relationship between the content level and the area corresponding to that content level is plotted to draw a calibration curve.

Then, using the calibration curve, the area of the LC/MS chromatogram of the fluorine-containing surfactant in the extract can be converted to the content of the fluorine-containing surfactant.

The hydrogen fluoride concentration in the PTFE powder is preferably 4.0 mass ppm or less, 3.0 mass ppm or less, 2.0 mass ppm or less, 1.0 mass ppm or less, 0.50 mass ppm or less, 0.10 mass ppm or less, or less than 0.05 mass ppm. The hydrogen fluoride concentration in the PTFE powder can be measured using a hydrogen fluoride detector tube.

(Forming)

The powder obtained by the production method of the present disclosure and the PTFE powder of the present disclosure can be each formed, thereby providing a PTFE formed article. The powder obtained by the production method of the present disclosure and the PTFE powder of the present disclosure each have excellent formability and have a decreased acid odor, and thus such a powder can be used to significantly improve a working environment during forming, and suppress generation of forming defects and produce a formed article at high productivity.

Examples of the method for forming the PTFE powder include compression molding, ram extrusion forming, and isobaric compression molding. The forming method is, of these, preferably compression molding. The PTFE powder is compression molded, thereby providing a PTFE compression-molded article.

In compression molding, in general, the PTFE powder is placed in a mold and compressed to prepare a preform, and the resulting preform is loaded in a furnace, sintered, and cooled, thereby providing a compression-molded article. The powder obtained by the production method of the present disclosure and the PTFE powder of the present disclosure each have excellent formability and thus can be easily added to a mold and can also be uniformly added to a mold. Furthermore, such a powder can be used to provide a precise formed article having no variation in color and also having no voids.

The compression molding can be performed by, for example, placing the PTFE powder in a mold, compressing the PTFE powder at 1 to 100 MPa, and heating and sintering a preform obtained by compression, at 345 to 400°C.

A formed article having a desired shape may be prepared by processing the PTFE formed article by machining

such as cutting. For example, a PTFE sheet can be obtained by cutting the PTFE formed article. The resulting PTFE sheet can be used in lining sheets, packings, gaskets, and diaphragm valves. The resulting PTFE sheet can also be used in heat-resistant electric wires, heat-resistant insulating tapes for vehicle motors/generators, release sheets, and the like.

The PTFE formed article can also be used in sealants, casing, sleeves, bellows, hoses, piston rings, butterfly valves, square tanks, wafer carriers, and the like.

The PTFE powder obtained by the production method of the present disclosure and the PTFE powder of the present disclosure can also be used in raw materials for granulation, and raw materials for compounds. The powder obtained by the production method of the present disclosure and the PTFE powder of the present disclosure may be granulated by a known granulation method. A filler may be appropriately compounded to the powder obtained by the production method of the present disclosure and the PTFE powder of the present disclosure. Furthermore, a powder for forming, to which a filler is compounded, may be granulated by a known granulation method. The resulting granulated product and material for forming may be formed in the same manner as in the method for forming the PTFE powder.

While embodiments have been described above, it will be understood that various changes in form and details can be made without departing from the gist and scope of the claims.

EXAMPLES

Next, embodiments of the present disclosure will now be described by way of Examples, but the present disclosure is not limited only to the Examples.

Various numerical values in the Examples were measured by the following methods.

<Average particle size (50% cumulative particle size)>

The average particle size was determined by the following laser diffraction method. The method was performed in a dry manner by using HELOS & RODOS system (trade name, manufactured by Sympatec GmbH). The shade of a measurement powder dispersed by compressed air at a dispersion pressure of 2 bar was reflected by laser and detected by a measurement sensor portion, thereby computing the particle size distribution of the measurement powder, and thus the average particle size (50% cumulative particle size) d50 was determined on a volume basis. The d50 was equal to the particle size corresponding to 50% in cumulative particle size distribution accumulation.

<Apparent density>

The apparent density was measured according to JIS K 6891.

<Water content>

The water content was determined by, for example, heating and thus sufficiently drying the crushed particle of PTFE at 150°C for 3 hours, measuring the mass of the crushed particle before and after heating, and performing calculation according to the following expression.

Water content (% by mass) = [(Mass (g) of crushed particle before heating) - (Mass (g) of crushed particle after heating)/(Mass (g) of crushed particle after heating] × 100

<Content of high-temperature volatile substance>

The mass of the PTFE powder heated at 370°C for 2 hours according to JIS K 6891 was measured, and the content was calculated by the following expression.

High-temperature volatile substance (% by mass) = [(Mass (g) of PTFE powder before heating) - (Mass (g) of PTFE powder after heating)]/(Mass (g) of PTFE powder before heating) × 100

<Standard specific gravity (SSG)>

Using a sample formed in accordance with ASTM D4894, the SSG was measured by the water replacement method in accordance with ASTM D792.

<Coloring degree>

210 g of the PTFE powder was weighed. A block of 50 mm (diameter) × 50 mm (height) was made by using a mold having a diameter of 50 mm and retaining it at a forming ram speed of 13 mm/min and a forming pressure of 29.4 MPa for 5 minutes. The block was fired at 370°C for 1.5 hours. The block was laterally divided using a turning machine, and the coloring degree of the center portion was measured with a color difference meter based on JIS Z 8722, thereby determining the value of Z for evaluation.

<Hydrogen fluoride concentration>

10 kg of the PTFE powder was added to a plastic bag made of PET, having a volume of 60 L, and left to still stand at room temperature in a cold dark place for 10 days. The gas in the bag was suctioned by using a hydrogen fluoride detector tube, according to the method recommended by the manufacturer, and the hydrogen fluoride concentration in the bag was determined from an indicated value. The detection limit was 0.05 mass ppm.

<Specific surface area>

The specific surface area of the PTFE powder was measured according to the BET method (flow method, one-point method), based on JIS Z8830, by using a mixed gas of 30% of nitrogen and 70% of helium, as a carrier gas, and cooling the gas with liquid nitrogen. The equipment here used was Macsorb HM Model-1210.

<Content of perfluoro(propyl vinyl ether) (PPVE)>

The content of PPVE in PTFE was determined by press-forming the PTFE powder to produce a thin film, subjecting the thin film disk to FT-IR measurement to provide the infrared absorbance, and multiplying the ratio of absorbance at 995 $cm^{-1}$/absorbance at 935 $cm^{-1}$ by 0.14.

<Measurement of fluorine-containing compound having hydrophilic group>

[Method for measuring content of compound represented by general formula (2)]

Extraction from PTFE powder

10 mL of methanol was added to 0.30 g of the PTFE powder, ultrasonic treatment was performed with warming to 60°C for 120 minutes, and a supernatant including a compound represented by general formula (2) was extracted.

General formula (2): $[C_{n-1}F_{2n-1}COO^{-}]M^{+}$

(wherein n represents an integer of 9 to 12 and $M^+$ represents a cation.)

Measurement of content of compound represented by general formula (2), contained in extract Calibration curve

Five concentration levels of methanol standard solutions of perfluorononanoic acid (PFNA), perfluorodecanoic acid (PFDA), perfluoroundecanoic acid (PFUnDA), and perfluorododecanoic acid (PFDoDA) having known concentrations were prepared in each of concentration ranges of 0.03 to 0.5 ng/mL, 0.5 to 5 ng/mL, and 5 to 50 ng/mL, and measurement was made using a liquid chromatograph-mass spectrometer. First-order approximation was used to create calibration curves from the sample concentrations and peak integral values thereof. The lower limit of quantification was 1 ppb/polymer.

Measuring instrument configuration and LC-MS measurement conditions

[Table 1]

Table 1

| | | | | |
|---|---|---|---|---|
| LC unit | | | | |
| Equipment | 1260HPLC manufactured by Agilent Technologies | | | |
| Column | GL Sciences Inc. InertSustaion C18 2.1×150mm 3 μm | | | |
| Mobile phase | A | $CH_3CN$ | | |
| | B | Aqueous 0.5 mM ammonium acetate solution containing 0.1% formic acid | | |
| | | | 0→1min | A:B=25:75 |
| | | | 1→26min | A:B=25:75 → A: B=100:0 |
| | | | 26→35min | A:B=100:0 |
| | | | 35→40min | A:B=25:75 |
| Flow rate | | | 0.2mL/min | |
| Column temperature | 40 °C | | | |
| Sample injection amount | 5pL | | | |
| MS unit | | | | |
| Equipment | QTRAP55t10 manufactured by Sciex | | | |
| Measurement mode | SRM | | | |
| Ionization method | Electrospray ionization<br>Negative mode | | | |
| SRM measurment parameters | | | | |

[Table 2]

Table 2

| Compound | Precursor | Product |
|---|---|---|
| $[C_8F_{17}COO^-]M^+$ | 463 | 419 |
| $[C_9F_{19}COO^-]M^+$ | 513 | 469 |
| $[C_{10}F_{21}COO^-]M^+$ | 563 | 519 |
| $[C_{11}F_{23}COO^-]M^+$ | 613 | 569 |

Content of compound represented by general formula (2), contained in extract

The compound represented by general formula (2) was measured using a liquid chromatograph-mass spectrometer. Concerning the liquid phase extracted, the peak area of the compound represented by general formula (2) with respect to each number of carbon atoms was determined by an SRM method, and the content of the compound represented by general formula (2) contained in the PTFE powder was determined.

Production Example 1

Polymerization of tetrafluoroethylene was performed by the method described in Production Example 3 of International Publication No. WO 2003/035724. In the polymerization, the amount of PPVE was 85 g, and no surfactant was used. The resulting suspension-polymerized particle of PTFE was taken out and washed with pure water twice, and washed and simultaneously crushed by a line mixer, to an average particle size of 350 μm, thereby providing a PTFE crushed particle. The resulting PTFE crushed particle was dehydrated by a vibrating dehydrate, to a water content of 5% by mass, thereby providing a dehydrated crushed particle. Then, a solid-gas mixture containing the crushed particle and gas was formed, then airflow dried under temperature adjustment so that the temperature measured at an exhaust port of hot air was 130°C, and separated into the dry particle and the gas, thereby providing a dry PTFE particle.

The average particle size of the resulting dry PTFE particle was 350 μm.

Comparative Example 1

The dry PTFE particle obtained in Production Example 1 was not subjected to fluorine radical treatment, but crushed by an air jet mill, thereby providing a PTFE powder. The hydrogen fluoride concentration was 4.8 mass ppm and an acid odor was felt.

Example 1

21 kg of the dry PTFE particle was placed in a 50-L reactor and the reactor was tightly sealed, and the content of the reactor was heated to 200°C and then purged with nitrogen for 1 hour to remove air in the reactor. The pressure in the reactor was reduced to 10 kPa at 200°C retained, and a mixed gas (fluorine/nitrogen (volume ratio) = 20/80) of fluorine gas ($F_2$) diluted with nitrogen gas was introduced as a fluorine radical source until the pressure reached 101 kPaG, and retained for 120 minutes. After completion of the reaction, the system was immediately purged with nitrogen gas for 1 hour to remove fluorine gas, and then the temperature in the reactor was decreased to 30°C. A starch/iodide test was performed, and no presence of fluorine gas in an inert gas was confirmed based on the presence or absence of coloration of an indicator. The temperature in the reactor was decreased to room temperature, and a fluorine radical-treated particle was recovered.
The fluorine radical-treated particle was crushed by an air jet mill to give a PTFE powder. The hydrogen fluoride concentration was less than 0.05 mass ppm and no acid odor was felt.
The specific surface area of the resulting PTFE powder was 3.5 $m^2/g$.
The content of PPVE in the resulting PTFE was 0.062% by mass.

Example 2

A PTFE powder was obtained by the same operations as Example 1 except that the treatment time with the mixed gas was changed from 120 minutes to 15 minutes. The hydrogen fluoride concentration was less than 0.05 mass ppm and no acid odor was felt.
The specific surface area of the resulting PTFE powder was 3.6 $m^2/g$.

Example 3

A PTFE powder was obtained by the same operations as Example 1 except that the temperature of the reaction with the mixed gas was changed from 200°C to 150°C and the treatment time was changed from 120 minutes to 240 minutes. The hydrogen fluoride concentration was less than 0.05 mass ppm and no acid odor was felt.

Example 4

A PTFE powder was obtained by the same operations as Example 1 except that the temperature of the reaction with the mixed gas was changed from 200°C to 250°C and the treatment time was changed from 120 minutes to 15 minutes. The hydrogen fluoride concentration was less than 0.05 mass ppm and no acid odor was felt.

Comparative Example 2

The dry PTFE particle obtained in Production Example 1 was crushed by an air jet mill so that the average particle size was about 30 μm. The crushed dry particle was subjected to fluorine radical treatment in the same manner as Example 1 to give a fluorine radical-treated particle. The fluorine radical-treated particle included a large mass having a particle size of 900 μm or more and had an average particle size exceeding the measurement range in the above measurement method, and thus the average particle size thereof could not be measured. The hydrogen fluoride concentration was less than 0.05 mass ppm and no acid odor was felt.

Example 5

30 g of the dry PTFE particle obtained in Production Example 1 was placed in a flow type reactor. The content of the reactor was heated to 150°C and purged with nitrogen for 1 hour to remove air in the reactor. A mixed gas (fluorine/nitrogen (volume ratio) = 20/80) of fluorine gas ($F_2$) diluted with nitrogen gas was allowed to flow at a flow rate of about 50 mL/min for 15 minutes, as a fluorine radical source, at 150°C retained. After completion of the reaction, the

system was immediately purged with nitrogen gas for 1 hour to remove fluorine gas, and then the temperature in the reactor was decreased to 30°C. A starch/iodide test was performed, and no presence of fluorine gas in an inert gas was confirmed based on the presence or absence of coloration of an indicator. The temperature in the reactor was decreased to room temperature, and a fluorine radical-treated particle was recovered.

The fluorine radical-treated particle was crushed by a cutter mill to give a PTFE powder. The average particle size was 25 μm and no acid odor was felt.

Example 6

A PTFE powder was obtained by the same operations as Example 5 except that the temperature of the reaction with the mixed gas was changed from 150°C to 200°C. The average particle size was 25 μm. No acid odor was felt.

Example 7

A PTFE powder was obtained by the same operations as Example 5 except that the time for allowing the mixed gas to flow was changed from 15 minutes to 1 minute. The average particle size was 30 μm and no acid odor was felt.

Example 8

A PTFE powder was obtained by the same operations as Example 5 except that the temperature of the reaction with the mixed gas was changed from 150°C to 250°C. The average particle size was 27 μm and no acid odor was felt.

Example 9

A PTFE powder was obtained by the same operations as Example 5 except that the temperature of the reaction with the mixed gas was changed from 150°C to 250°C and the reaction time was changed from 15 minutes to 1 minute. The average particle size was 29 μm and no acid odor was felt.

Physical properties of the PTFE powder are shown in Table 3.

[Table 3]

Table 3

| | | Comparative Example 1 | Example 1 | Example 2 | Example 3 | Example 4 |
|---|---|---|---|---|---|---|
| Average particle size | μm | 23 | 24 | 23 | 23 | 25 |
| Apparent density | g/ml | 0.36 | 0.35 | 0.35 | 0.35 | 0.36 |
| High-temperature volatile substance | % by mass | 0.015 | 0.002 | 0.002 | 0.002 | 0.002 |
| SSG | - | 2.172 | 2.172 | 2.172 | 2.172 | 2.172 |
| Coloring degree | - | 92 | 99 | 99 | 98 | 99 |

The content of the compound represented by general formula (2) is shown in Table 4.

[Table 4]

Table 4

| General formula (2): $[C_{n-1}F_{2n-1}COO^-]M^+$ | | | | | | | | | | |
|---|---|---|---|---|---|---|---|---|---|---|
| n | Comparative Example 1 ppb/polymer | Example 1 ppb/polymer | Example 2 ppb/polymer | Example 3 ppb/polymer | Example 4 ppb/polymer | Example 5 ppb/polymer | Example 6 ppb/polymer | Example 7 ppb/polymer | Example 8 ppb/polymer | Example 9 ppb/polymer |
| 9 | 30 | 2 | 5 | 3 | <1 | 8 | <1 | <1 | <1 | <1 |
| 10 | 5 | 0 | 3 | 1 | <1 | 5 | <1 | <1 | <1 | <1 |
| 11 | 35 | 2 | 3 | 3 | <1 | 6 | <1 | <1 | <1 | <1 |
| 12 | 4 | 0 | 2 | 2 | <1 | 4 | <1 | <1 | <1 | <1 |
| total | 74 | 4 | 13 | 9 | <1 | 23 | <1 | <1 | <1 | <1 |

**Claims**

1. A method for producing a polytetrafluoroethylene powder, comprising:

   subjecting tetrafluoroethylene to suspension polymerization in an aqueous medium to prepare a suspension-polymerized particle of a non melt-processible polytetrafluoroethylene,
   drying the suspension-polymerized particle to prepare a dry particle,
   subjecting the dry particle to fluorine radical treatment to prepare a fluorine radical-treated particle, and
   crushing the fluorine radical-treated particle to produce a polytetrafluoroethylene powder.

2. The production method according to claim 1, the method comprising washing and then crushing the suspension-polymerized particle, or crushing the suspension-polymerized particle with washing, to prepare a crushed suspension-polymerized particle, and then drying the crushed suspension-polymerized particle.

3. The production method according to claim 1 or 2,
   wherein an average particle size of the dry particle is 100 to 800 μm.

4. The production method according to any one of claims 1 to 3, wherein tetrafluoroethylene and a modifying monomer are subjected to suspension polymerization.

5. The production method according to claim 4, wherein the modifying monomer is a perfluoro(alkyl vinyl ether).

6. The production method according to claim 4 or 5,
   wherein an amount of the modifying monomer added in suspension polymerization is 0.01 to 1.0% by mass based on an amount of the polytetrafluoroethylene.

7. The production method according to any one of claims 1 to 6, wherein an average particle size of the powder is 200 μm or less.

8. The production method according to any one of claims 1 to 7, wherein a standard specific gravity of the powder is 2.200 or less.

9. The production method according to any one of claims 1 to 8, wherein a specific surface area of the powder is 5.0 $m^2/g$ or less.

10. The production method according to any one of claims 1 to 9, wherein the powder is substantially free from a compound represented by the following general formula (2):

    General formula (2): $[C_{n-1}F_{2n-1}COO^-]M^+$

    wherein n represents an integer of 9 to 12 and $M^+$ represents a cation.

11. The production method according to any one of claims 1 to 10, wherein suspension polymerization is carried out in the presence or absence of a surfactant, and an amount of the surfactant is 2000 mass ppm or less based on the aqueous medium.

12. A method for producing a polytetrafluoroethylene formed article, the method comprising producing the powder by the production method according to any one of claims 1 to 11, and then forming the powder to give a formed article.

13. A method for producing a polytetrafluoroethylene compression-molded article, the method comprising producing the powder by the production method according to any one of claims 1 to 11, and then compression molding the powder to give a compression-molded article.

14. A polytetrafluoroethylene powder containing a non melt-processible polytetrafluoroethylene, wherein an average particle size is 200 μm or less and a content of a high-temperature volatile substance is 0.010% by mass or less based on a mass of the polytetrafluoroethylene powder.

15. The polytetrafluoroethylene powder according to claim 14, wherein a specific surface area is 5.0 $m^2$/g or less.

16. The polytetrafluoroethylene powder according to claim 14 or 15, wherein a Z value measured after a formed article obtained from the polytetrafluoroethylene powder is heated at 370°C for 1.5 hours is 95 or more.

17. The polytetrafluoroethylene powder according to any one of claims 14 to 16, wherein a standard specific gravity is 2.200 or less.

18. The polytetrafluoroethylene powder according to any one of claims 14 to 17, wherein the polytetrafluoroethylene powder is substantially free from a fluorine-containing compound having a hydrophilic group.

19. The polytetrafluoroethylene powder according to claim 18, wherein the fluorine-containing compound having a hydrophilic group is a compound represented by the following general formula (2):

General formula (2): $[C_{n-1}F_{2n-1}COO^-]M^+$

wherein n represents an integer of 9 to 12 and $M^+$ represents a cation.

20. The polytetrafluoroethylene powder according to any one of claims 14 to 19, wherein the polytetrafluoroethylene powder is substantially free from a fluorine-containing surfactant.

21. The polytetrafluoroethylene powder according to any one of claims 14 to 20, wherein the polytetrafluoroethylene contains tetrafluoroethylene unit and a modifying-monomer unit.

22. The polytetrafluoroethylene powder according to claim 21, wherein the modifying-monomer unit is a perfluoro(alkyl vinyl ether) unit.

23. The polytetrafluoroethylene powder according to claim 21 or 22, wherein a content of the modifying-monomer unit is 0.01 to 1.0% by mass based on all polymerization units in the polytetrafluoroethylene.

24. A polytetrafluoroethylene formed article obtained by forming the polytetrafluoroethylene powder according to any one of claims 14 to 23.

25. A polytetrafluoroethylene compression-molded article obtained by compression molding the polytetrafluoroethylene powder according to any one of claims 14 to 23.

## INTERNATIONAL SEARCH REPORT

International application No.
**PCT/JP2022/026257**

**A. CLASSIFICATION OF SUBJECT MATTER**

***C08J 3/12***(2006.01)i; ***C08F 8/20***(2006.01)i; ***C08F 14/26***(2006.01)i
FI: C08J3/12 CEW; C08F14/26; C08F8/20

According to International Patent Classification (IPC) or to both national classification and IPC

**B. FIELDS SEARCHED**

Minimum documentation searched (classification system followed by classification symbols)

C08J3/12; C08F8/20; C08F14/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 63-270740 A (DAIKIN INDUSTRIES, LTD.) 08 November 1988 (1988-11-08) claims, p. 2, upper right column, second paragraph, p. 3, upper right column, third paragraph, examples | 1-25 |
| X | WO 2019/156071 A1 (DAIKIN INDUSTRIES, LTD.) 15 August 2019 (2019-08-15) claims, paragraphs [0010]-[0017], [0090], [0097], [0100], examples | 14-25 |
| A | WO 2010/114033 A1 (DAIKIN INDUSTRIES, LTD.) 07 October 2010 (2010-10-07) entire text | 1-25 |
| A | WO 2013/146078 A1 (DAIKIN INDUSTRIES, LTD.) 03 October 2013 (2013-10-03) entire text | 1-25 |
| A | WO 2013/005743 A1 (ASAHI GLASS COMPANY, LIMITED) 10 January 2013 (2013-01-10) entire text | 1-25 |
| A | JP 10-147617 A (DAIKIN INDUSTRIES, LTD.) 02 June 1998 (1998-06-02) entire text | 1-25 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 July 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2022/026257

C. DOCUMENTS CONSIDERED TO BE RELEVANT

| Category* | Citation of document, with indication, where appropriate, of the relevant passages | Relevant to claim No. |
|---|---|---|
| A | JP 62-104822 A (E. I. DU PONT DE NEMOURS AND COMPANY) 15 May 1987 (1987-05-15) entire text | 1-25 |

Form PCT/ISA/210 (second sheet) (January 2015)

**INTERNATIONAL SEARCH REPORT**
**Information on patent family members**

International application No.
**PCT/JP2022/026257**

| Patent document cited in search report | Publication date (day/month/year) | Patent family member(s) | Publication date (day/month/year) |
|---|---|---|---|
| JP 63-270740 A | 08 November 1988 | US 4898779 A<br>claims, column 1, lines 46-50, column 3, lines 18-23, examples | |
| WO 2019/156071 A1 | 15 August 2019 | US 2021/0040303 A1<br>claims, paragraphs [0015]-[0024], [0097], [0104], [0107], examples | |
| WO 2010/114033 A1 | 07 October 2010 | US 2012/0101214 A1<br>entire text | |
| WO 2013/146078 A1 | 03 October 2013 | US 2015/0030857 A1<br>entire text | |
| WO 2013/005743 A1 | 10 January 2013 | US 2014/0121331 A1<br>entire text | |
| JP 10-147617 A | 02 June 1998 | (Family: none) | |
| JP 62-104822 A | 15 May 1987 | US 4743658 A<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014123075 A
- JP 2001048922 A
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A
- WO 2019161153 A
- WO 2003035724 A